# EUROPEAN PATENT APPLICATION

(11) **EP 1 880 618 A1**
(43) Date of publication of application: **23.01.2008**
(21) Application number: 05748613.6
(22) Date of filing: 13.06.2005
(51) Int. Cl.: A23L 2/52

(54) **METHOD AND APPARATUS FOR PRODUCING OXYGEN-CONTAINING REDUCING AQUEOUS BEVERAGE**

(30) Priority: 13.05.2005 WO PCT/JP2005/008749
(71) Applicant: Murota, Wataru, Kahoku-gun, Ishikawa 929-0324 (JP)
(72) Inventor: Murota, Wataru, Kahoku-gun, Ishikawa 929-0324 (JP)
(74) Representative: Chapple, Colin Richard
(86) International application number: PCT/JP2005/010817
(87) International publication number: WO 2006/120761

(57) **Abstract**

An aqueous beverage (11) in a container (12) is raised in pressure to a predetermined level by a pressurizing pump (13) to feed it to a liquid introduction path (51A), oxygen gas from an oxygen gas container (15) is fed to a gas introduction path (56A) of an ejector (50A), and a pressurized oxygen-containing aqueous beverage obtained from a static mixer (60A) connected to an ejector (50) is led to the upper part of a receiver (21) maintained at normal pressure. Then, the oxygen-containing aqueous beverage (22) in the receiver (21) is again raised in pressure to a predetermined level by a pressurizing pump (23) to feed it to a liquid introduction path (51B) of a second ejector (50B), hydrogen gas from a hydrogen gas container (25) is fed to a gas introduction path (56B) of an ejector (50B), and a static mixer (60B) connected to the ejector (50B) is connected to the upper part of a receiver (31) maintained at the normal pressures. As a result, an oxygen-containing reducing aqueous beverage (32) is obtained, where the beverage contains a large amount of oxygen but yet it has very low oxidation-reduction potential and a very high reducing ability.

## Description

### BACKGROUND OF THE INVENTION

### Field of the Invention

The present invention relates to a method and apparatus suitable for mass production and capable of producing an oxygen-containing reducing aqueous beverage containing a large amount of oxygen and yet high in reducing ability.

### Description of the Prior Art

Production of water low in oxidation-reduction potential has been always done either by electrolysis (See Patent Reference 1 to 3), or by dissolving hydrogen under the application of pressure (See Patent Reference 4). Thus, reducing aqueous beverages low in oxidation-reduction potential have so far been presumed capable of being produced on the basis of only the way of thinking that hydrogen is pressurized and dissolved into aqueous beverages such as water, mineral water, tea, coffee and juice.

Even if a reducing aqueous beverage is produced by such a conventional known method, oxygen which the human body requires is little contained in the reducing aqueous beverage thus produced. For example, the content of oxygen in reducing water with hydrogen dissolved therein under the application of pressure was found to be 0.04 mg/liter (measured with a contained oxygen meter manufactured by DKK-TOA Corporation). It is a matter of course that there could be obtained only a reducing aqueous beverage low in oxygen content because the oxygen originally contained in the aqueous beverage is expelled by hydrogen.

Both oxygen gas and hydrogen gas can exist in water. However, for obtaining a reducing aqueous beverage high in oxygen concentration, it is impossible to simply adopt a method of dissolving hydrogen into an aqueous beverage such as water, mineral water, tea, coffer or juice under the application of pressure to enhance the reducing ability of the aqueous beverage. Particularly, when hydrogen gas is bubbled into the aqueous beverage, there exists a partial pressure of hydrogen gas only, so that any other gas, e.g., oxygen gas, cannot be present together with the hydrogen gas and assumes a completely degassed stage. That is, oxygen which is necessary for the human body is lost from the aqueous beverage.

In case of producing an aqueous beverage low in oxidation-reduction potential by an electrolytic method, alkalinity is merely exhibited by OH⁻ ions and it is not that hydrogen gas is contained more than a saturated concentration. Alkalinity exhibits reducing ability in appearance because a reducing power is created by OH· ions, but return to neutral results in an increase of oxidation-reduction potential. That is, only feigned reducing ability is shown. Besides, if a man drinks a large amount of an alkaline solution, there will arise a problem of health. Particularly, it is heavy burden on the kidney and therefore drinking an alkaline solution in a large amount is harmful to a man suffering from a kidney trouble. On the other hand, for a man suffering from acid dyspepsia, a slight effect will be recognized if the amount of the solution in question is a proper amount. However, this effect is an effect resulting from neutralization of the acid in the stomach by the alkaline solution and not by hydrogen gas or reducing power.

There also is known a method wherein metal magnesium is mixed into an aqueous beverage to afford reducing water. In this case, however, magnesium ions and OH ions are also generated together with hydrogen gas, so that the water becomes alkaline. Since magnesium ions are used as a laxative or the like, the use thereof in a proper amount may be effective in retaining health. As noted above, however, drinking a large amount of an alkaline aqueous beverage tends to impede the function of being neutral constantly exhibited by the human body and is therefore dangerous. The mere dissolving method of hydrogen gas is considered better because alkalinity is not exhibited.

[Patent Reference 1]: Japanese Patent Laid-Open Publication No. 2001-145880 (Paragraphs [0043] to [0049])
[Patent Reference 2]: Japanese Patent Laid-Open Publication No. 2001-137852 (Paragraphs [0041] to [0042], [0045] to [0053])
[Patent Reference 3]: Japanese Patent Laid-Open Publication No. 2002-254078 (Claims, Paragraphs [0072] to [0073], [0077] to [0086])
[Patent Reference 4]: Japanese Patent Laid-Open Publication No. 2004-230370 (Claims)

Having conducted various experiments for the purpose of producing an oxygen-containing reducing aqueous beverage containing a large amount of oxygen required by the human body and yet very high in hydrogen concentration and very low in oxidation-reduction potential, the present inventor found out that a reducing aqueous beverage containing a large amount of oxygen and yet very high in hydrogen concentration and very low in oxidation-reduction potential could be obtained by incorporating hydrogen into an aqueous beverage after incorporating oxygen therein under the application of pressure or by incorporating both oxygen and hydrogen at a time into an aqueous beverage, and the present inventor has already filed a patent application for this finding (Japanese Patent Application No. 2005-92554, hereinafter referred to as the "prior application").

The invention of the prior application comprises the steps of dissolving oxygen in an aqueous beverage under at a pressure at 1 to 1000 atmospheres, maintaining the pressurized state or releasing the pressure to normal pressure, dissolving hydrogen into the resulting aqueous beverage at a pressure of 1 to 1000 atmospheres and then releasing the pressure to normal pressure to afford an aqueous beverage. The aqueous beverage thus produced is an oxygen-containing reducing aqueous beverage substantially containing not less than 0.1 mg/liter of oxygen and having a hydrogen concentration of not less than 0.1 ppm. This oxygen-containing reducing aqueous beverage contains a large amount of oxygen gas and yet its oxidation-reduction potential is as low as -50 mV or less even in an acidic pH region or -500 mV or less in a pH region close to neutral. It is a beverage low in oxidation reduction potential and high in reducing ability.

In the invention of the prior application there is produced an oxygen-containing reducing aqueous beverage with use of a known gas-liquid contacting apparatus. In this known gas-liquid contacting apparatus, an aqueous beverage is dropped in the form of droplets and gas to be dissolved in the aqueous beverage is applied to and dissolved in the aqueous beverage. However, the apparatus in question involves the problem that the gas dissolving efficiency is not so high and the gas-liquid contacting apparatus become large-sized.

Having conducted various experiments for solving the above-mentioned problems of the invention of the prior application, the present inventor found out that a method and apparatus small in size and yet high in gas dissolving speed and suitable for mass production and capable of producing an oxygen-containing reducing aqueous beverage could be provided by dissolving pressurized oxygen or hydrogen directly into a pressurized aqueous beverage flowing through a pipe. On the basis of this finding the present inventor accomplished the present invention.

### SUMMARY OF THE INVENTION

It is a first object of the present invention to provide a method suitable for mass production and capable of producing a reducing aqueous beverage containing a large amount of oxygen and yet very high in hydrogen concentration and very low in oxidation-reduction potential by incorporating both oxygen and hydrogen simultaneously into an aqueous beverage.

It is a second object of the present invention to provide an apparatus suitable for mass production and capable of producing a reducing aqueous beverage containing a large amount of oxygen and yet very high in hydrogen concentration and very low in oxidation-reduction potential by incorporating both oxygen hydrogen simultaneously into an aqueous beverage.

The above first object of the present invention is achieved by the following manufacturing method. In a first aspect of the present invention there is provided a method for producing an oxygen-containing reducing aqueous beverage, comprising the following steps (1) to (4):
(1) mixing pressurized oxygen gas into a pressurized aqueous beverage flowing through a pipe to afford a pressurized oxygen-containing aqueous beverage;
(2) releasing the pressure of the pressurized oxygen-containing aqueous beverage to normal pressure to afford an oxygen-containing aqueous beverage of normal pressure with undissolved oxygen gas released;
(3) pressurizing the oxygen-containing aqueous beverage of normal pressure to afford a pressurized oxygen-containing aqueous beverage;
(4) mixing pressurized hydrogen gas into the pressurized oxygen-containing aqueous beverage flowing through a pipe to afford a pressurized oxygen-containing reducing aqueous beverage; and
(5) releasing the pressure of the pressurized oxygen-containing reducing aqueous beverage to normal pressure, thereby allowing undissolved oxygen gas and hydrogen gas to be released to afford an oxygen-containing reducing aqueous beverage of normal pressure.

In the above first aspect it is preferable that the pressurizing pressure be in the range of 1 to 1000 atmospheres (gauge pressure, this is also true in the following). In this case, the higher the pressure, the more efficiently can oxygen gas and hydrogen gas be dissolved in the aqueous beverage. However, since the pressure of the oxygen-containing reducing aqueous beverage obtained is released to normal pressure, a too high pressure would cause vaporization of part of the dissolved oxygen gas and hydrogen gas. Therefore, it is preferable that the upper limit of the pressure be set at 10 atmospheres. In other words, the aforesaid pressure range is more preferably 1 to 10 atmospheres.

Moreover, in the above first aspect, it is preferable that the aqueous beverage be one member selected from the group consisting of water, mineral water, tea, coffee, and juice.

Further, in the above first aspect, the steps (1) and (4) may each be carried out using a static mixer and/or an ejector.

The foregoing first object of the present invention can also be achieved by the following manufacturing method. In a second aspect of the present invention there is provided a method for producing an oxygen-containing reducing aqueous beverage, comprising the following steps (1) to (3):
(1) mixing pressurized oxygen gas into a pressurized aqueous beverage flowing through a pipe to afford a pressurized oxygen-containing aqueous beverage;
(2) mixing pressurized hydrogen gas into the pressurized oxygen- containing aqueous beverage flowing through a pipe to afford a pressurized oxygen-containing reducing aqueous beverage; and
(3) releasing the pressure of the pressurized oxygen-containing reducing aqueous beverage to normal pressure, thereby allowing undisssolved oxygen gas and hydrogen gas to be released to afford an oxygen-containing aqueous beverage of normal pressure.

In the above second aspect it is preferable that the pressurizing pressure be in the range of 1 to 1000 atmospheres, more preferably 1 to 10 atmospheres.

In the above second aspect it is preferable that the aqueous beverage be one member selected from the group consisting of water, mineral water, tea, coffee, and juice.

In the above second aspect the first and second steps (1), (2) may be carried out using a static mixer and/or an ejector.

The foregoing second object of the present invention can be achieved by the following construction. In a third aspect of the present invention there is provided an apparatus for producing an oxygen -containing reducing aqueous beverage, comprising:
an aqueous beverage supply pipe for the supply of an aqueous beverage in a pressurized state by a pump, the aqueous beverage supply pipe being connected to a liquid introduction path in first pipe-like gas-liquid mixing means;
an oxygen gas supply pipe for the supply of pressurized oxygen gas from a pressurized oxygen supply source, the oxygen gas supply pipe being connected to a gas introduction path in the first pipe-like gas-liquid mixing means;
a receiver for receiving therein an oxygen-containing aqueous beverage held at normal pressure, an outlet flow path in the first pipe-like gas-liquid mixing means being connected to the receiver;
an oxygen-containing aqueous beverage supply pipe for the supply of the oxygen-containing aqueous beverage from the receiver in a pressurized state by a pump, the oxygen-containing aqueous beverage supply pipe being connected to a liquid introduction path in second pipe-like gas-liquid mixing means;
a hydrogen gas supply pipe for the supply of pressurized hydrogen gas from a pressurized hydrogen supply source, the hydrogen gas supply pipe being connected to a gas introduction path in the second pipe-like gas-liquid mixing means; and
a receiver for receiving therein an oxygen-containing reducing aqueous beverage held at normal pressure, an outlet flow path in the second pipe-like gas-liquid mixing means being connected to the receiver

By the pipe-like gas-liquid mixing means as referred to herein is meant means for bring gas into contact with liquid flowing through a pipe to dissolve the gas in the liquid and it is publicly known before the present application is filed. Examples of the pipe-like gas-liquid mixing means include a pipe provided partially with a gas permeating film or a porous gas permeating plate, or a pipe provided internally with a gas inlet, or an ejector. Combinations thereof with known mixing promoting means, e.g., baffle plate or porous plate, or with static mixer and the like, are also included therein.

In the above third aspect it is preferable that the pressurized oxygen supply source and the pressurized hydrogen supply source be each contained in a gas cylinder.

In the above third aspect it is preferable that the aqueous beverage supply source be at least one member selected from the group consisting of water, mineral water, tea, coffee, and juice.

In the above third aspect, the pipe-like gas-liquid mixing means (1) and (4) may each be provided with a static mixer and/or an ejector.

Further, the foregoing second object of the present invention can also be achieved by the following construction. In a fourth aspect of the present invention there is provided an apparatus for producing an oxygen-containing reducing aqueous beverage, comprising:
an aqueous beverage supply pipe for the supply of an aqueous beverage in a pressurized state by a pump, the aqueous beverage supply pipe being connected to a liquid introduction path in a first pipe-like gas-liquid mixing means;
a second pipe for the supply of pressurized oxygen gas from pressurized oxygen gas supply source, the second pipe being connected to a gas introduction path in the first pipe-like gas-liquid mixing means;
an outlet flow path in the first pipe-like gas-liquid mixing means, the outlet flow path being connected to a liquid introduction path in a second pipe-like gas-liquid mixing means;
a hydrogen gas supply pipe for the supply of pressurized hydrogen gas from a pressurized hydrogen supply source, the hydrogen gas supply pipe being connected to a gas introduction path in the second pipe-like gas-liquid mixing means; and
a receiver for receiving therein an oxygen-containing reducing aqueous beverage held at normal pressure, an outlet flow path in the second pipe-like gas-liquid mixing means being connected to the receiver.

In the above fourth aspect it is preferable that the pressurized oxygen supply source and the pressurized hydrogen supply source be each contained in a gas cylinder.

In the above fourth aspect it is preferable that the aqueous beverage supply source be at least one member selected from the group consisting of water, mineral water, tea, coffer, and juice.

In the above fourth aspect, the pipe-like gas-liquid mixing means (1) and (4) may each be provided with a static mixer and/or an ejector.

According to the present invention, with the above constructions and as will be described in detail below, it is possible to provide a method and apparatus capable of producing a large amount of an oxygen-containing reducing aqueous beverage having an oxygen quantity necessary for the human body and yet having an extremely low oxidation-reduction potential attained by hydrogen which can permeate a cell membrane, both such properties being seemingly contrary to each other, in contrast with the conventional reducing aqueous beverage obtained by mere absorption of hydrogen into an aqueous beverage which conventional reducing aqueous beverage is too low in oxygen content to ensure the oxygen quantity required for the human body.

### BRIEF DESCRIPTION OF THE DRAWINGS

Fig. 1 is a schematic diagram of an apparatus used in working examples of the present invention for producing an oxygen-containing reducing aqueous beverage.
Fig. 2 is a cross-sectional view of an ejector used in the present invention.
Fig. 3A is a cross-sectional view of a static mixer used in the present invention, Fig. 3B is a front view of a right-hand-twisted element, Fig. 3C is a 90° turned view of Fig. 3B, Fig. 3D is a front view of a left-hand-twisted element, and Fig. 3E is a 90° turned view of Fig. 3D.
Fig. 4 is a schematic diagram of an apparatus for producing an oxygen-containing reducing aqueous beverage according to a modification.
Figs. 5A and 5B are sectional views each showing an example of a gas introducing portion in pipe-like gas-liquid mixing means.

DESCRIPTION OF THE PREFERRED EMBODIMENT

The present invention will be described in detail hereunder by way of working examples thereof, but the following examples have no intention of limiting the present invention thereto. The present invention is equally applicable to various modifications without departing from the technical idea shown in the appended claims.

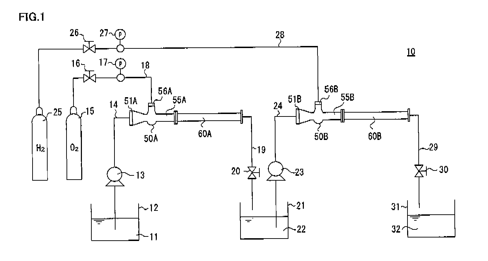

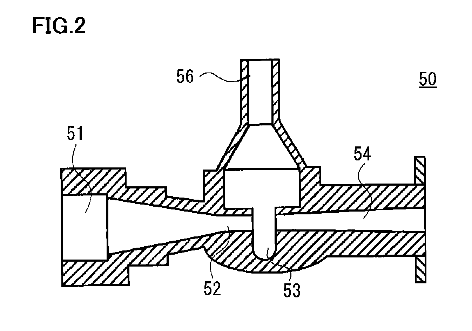

An apparatus 10 for producing an oxygen-containing reducing aqueous beverage used in the working examples will be explained with reference to Figs. 1 to 3. The apparatus 10 is provided with an ejector and a static mixer as pipe-like gas-liquid mixing means. The ejector, indicated at 50, includes a liquid introduction path 51, a nozzle portion 52 extending from the liquid introduction path 51 so as to be reduced in inner diameter toward a tip end thereof, a diffusion chamber 53, a diffuser portion 54 extending so as to be larger in inner diameter toward a tip end thereof, an outlet flow path 55 having a uniform inner diameter and communicating with the diffuser portion 54, and a gas introduction path 56 contiguous to the diffusion chamber 53- In the ejector 50, when liquid is introduced from the liquid introduction path 51 and ejected to the diffuser portion 54 from the nozzle 52, the interior of the diffusion chamber 53 becomes negative in pressure, so the gas is sucked in from the gas introduction path 56 and is fully mixed with the liquid in the diffuser portion 54. Consequently, the sucked gas can be absorbed efficiently into the liquid. Besides, since it is possible to increase the flow rate of liquid, a large amount of gas can be absorbed into a large amount of liquid despite the ejector being small-sized.

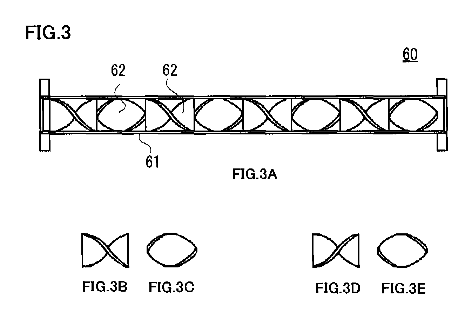

With only the use of the ejector 50, it is possible to attain high gas absorption efficiency but particularly the use of the static mixer makes it possible to prolong the liquid-gas contact time, whereby the gas absorption efficiency can be further improved. This static mixer, indicated at 60 and as shown in Fig. 3A, comprises plural (e.g., eight) elements 62 arranged within an elongated tubular housing 61. The elements 62 comprise right.hand-twisted (see Figs. 3B and 3C) or left-hand-twisted (see Figs. 3D and 3E) elements each obtained by right- or left-hand twisting 180° a rectangular metallic plate. Figs. 3B and 3D are front views of a right-hand-twisted element and a left-hand-twisted element, respectively and Figs- 3C and 3E illustrate the elements of Figs. 3B and 3C, respectively, in a 90° turned state. The static mixer 60 is fabricated by properly combining a required number of such elements 62.

As shown in Fig. 1, the apparatus 10 for producing an oxygen- containing reducing aqueous beverage, which is used in the working examples, includes a first ejector 50A and a first static mixer 60A, as well as a second ejector 50B and a second static mixer 60B. The static mixers 60A and 60B are each about 1.5 cm long by about 1 cm wide, using a combination of both right-hand- and left-hand-twisted elements in the same number. An 8-element type static mixer is about 18 cm long, while a 32-element type is about 54 cm long.

The use of only the first ejector 50A and the second ejector 50B, without the use of the first and second static mixers 60A, 60B, is also included in the working examples of the present invention. However, for the convenience of explanation, it is assumed in the following description that there are used only the first and second static mixers 60A, 60B.

An aqueous beverage supply pipe 14 provides a connection between a container 12 and a liquid introduction path 51A in the first ejector 50A through a pressurizing pump 13, the container 12 containing an aqueous beverage 11 which is one of water, mineral water, tea, coffee, and juice. Likewise, an oxygen gas supply pipe 18 provides a connection between an oxygen cylinder 15 as a pressurized oxygen supply source and a gas introduction path 56A in the first ejector 50A through a pressure reducing valve 16, a pressure gauge 17 and a flow meter (not shown). Further, an outlet flow path 55A in the first ejector 50A is put in communication with an upper portion of an oxygen-containing aqueous beverage receiver 21 held at normal pressure through the first static mixer 60A, an oxygen-containing aqueous beverage supply pipe 19 and a stop valve 20.

An oxygen-containing aqueous beverage supply pipe 24 provides a connection between the oxygen-containing aqueous beverage receiver 21 and a gas introduction path 51B in the second ejector 50B through a pressurizing pump 23. Likewise, a hydrogen gas supply pipe 28 provides a connection between a hydrogen cylinder 25 as a pressurized hydrogen supply source and a gas introduction path 56B in the second ejector 50B through a pressure reducing valve 26, a pressure gauge 27 and a flow meter (not shown). Further, an outlet flow path 55B in the second ejector 50B is put in communication with an upper portion of an oxygen-containing reducing aqueous beverage receiver 31 held at normal pressure through the second static mixer 60B, an oxygen-containing reducing aqueous beverage supply pipe 29 and a stop valve 30.

The apparatus 10 for producing an oxygen-containing reducing aqueous beverage is operated in the following manner to produce a predetermined oxygen-containing reducing aqueous beverage 32. More specifically, the aqueous beverage 11 contained in the container 12 is pressurized to a predetermined pressure, e.g., 1 to 10 atmospheres, by the pressurizing pump 13 and is fed to the liquid introduction path 51A in the first ejector 50A. The oxygen gas present within the oxygen gas cylinder 15 is reduced in pressure to a predetermined level, e.g., 1 to 10 atmospheres, by the pressure reducing valve 16 and is fed to the gas introduction path 56A in the ejector 50A by the oxygen gas supply pipe 18.

As a result, a pressurized oxygen-containing aqueous beverage is obtained from the first static mixer 60A and it is then conducted through the oxygen-containing aqueous beverage supply pipe 19 and the stop valve 20 to the upper portion of the receiver 21 which is held at normal pressure. In the receiver 21, a portion of oxygen gas dissolved in the oxygen-containing aqueous beverage thus produced, which is indicated at 22, vaporizes, but a large amount of oxygen gas remains in a supersaturated state within the oxygen-containing aqueous beverage 22. The vaporized oxygen gas is released into the atmosphere.

The oxygen-containing aqueous beverage 22 produced and present within the receiver 21 is pressurized again to a predetermined pressure, e.g., 1 to 10 atmospheres, by the pressurizing pump 23 and is fed to the liquid introduction path 51B in the second ejector 50B through the oxygen-containing aqueous beverage supply pipe 24. On the other hand, the hydrogen gas present within the hydrogen gas cylinder 25 is reduced in pressure to a predetermined level, e.g., 1 to 10 atmospheres, by the pressure reducing valve 26 and is fed to the gas introduction path 56B in the ejector 50B through the hydrogen gas supply pipe 28.

As a result, a pressurized oxygen-containing reducing aqueous beverage is obtained from the second static mixer 60B, then it passes through the oxygen-containing reducing aqueous beverage supply pipe 29 and the stop valve 30 and is introduced into the upper portion of the oxygen-containing reducing aqueous beverage receiver 31 which is held at normal pressure. At this time, a portion of the hydrogen gas and that of the oxygen gas dissolved in the oxygen-containing reducing aqueous beverage 32 thus obtained vaporize, but a large amount of hydrogen gas remains in a supersaturated state within the oxygen-containing reducing aqueous beverage 32 and so does the oxygen gas. The vaporized hydrogen gas and oxygen gas are released into the atmosphere. In this connection, a consideration is given so that the vaporized hydrogen-oxygen gas mixture is quickly released outdoors to prevent the occurrence of any danger. In this way there is obtained the oxygen-containing reducing aqueous beverage 32 which contains a large amount of oxygen and yet very low in oxidation-reduction potential and high in reducing ability.

Although in the above description one of water, mineral water, tea, coffee and juice is selected and used as the aqueous beverage 11, there may be provided plural containers containing those aqueous beverages respectively so that a desired aqueous beverage can be selected by switching flow paths from one to another. As to the pressurizing pressure, which was set above to 1 to 10 atmospheres, the higher the pressure, the more efficiently can oxygen gas and hydrogen gas be dissolved in the aqueous beverage. However, since the pressure of the resultant oxygen-containing reducing aqueous beverage is returned to normal pressure, a too high pressure will cause partial vaporization of the dissolved oxygen and hydrogen gases. Therefore, it is better to set the upper limit of the pressure at 10 atmospheres.

### [Examples 1 to 3]

In the following Examples 1 to 3, an oxygen-containing reducing aqueous beverage was produced in the following manner with use of the apparatus 10 for producing an oxygen-containing reducing aqueous beverage, which is shown in Fig. 1 and tap water (oxidation-reduction potential +420mV, pH=7.2) available in Chuo Ward, Tokyo as raw water Example 1 used only the ejectors 50A and 50B without using a static mixer. Example 2 used an 8-element type static mixer in combination with the ejectors used in Example 1. Example 3 used a 32-element type static mixer in combination with the ejectors used in Example 1.

Oxygen-containing reducing water was produced under the condition that the raw water flow rate, raw water pressure, oxygen-containing water flow rate, oxygen pressure, oxygen-containing water pressure and hydrogen pressure were common to all of Examples 1 to 3. Manufacturing conditions and measurement results are together shown in Table 1. Oxidation-reduction potential, oxygen content and pH were measured using an OPR measuring instrument manufactured by DKK-TOA Corporation, an oxygen amount meter and a pH meter, respectively. The measurements were all conducted at room temperature (this is also true in the following).

**[Table 1]**

| | | Example 1 | Example 2 | Example 3 |
|---|---|---|---|---|
| | Static mixer | Not used | 8 elements | 32 elements |
| Addition of oxygen | Raw water flow rate Raw water pressure | 1300ml/min | 1300 ml/min | 1300 ml/min |
| | Oxygen pressure | 2.2 atmospheres | 2.2 atmospheres | 2.2 atmospheres |
| | Oxygen content Hydrogen content | 2.3 atmospheres | 2.3 atmospheres | 2.3 atmospheres |
| | ORP | 8.3 mg/I. 0 mg/L + 405 mV | 30.3 mg/L 0 xzzg/L + 404 mV | 48.05 mg/L 0 mg/L + 385 mV |
| | | | | |
| Addition of hydrogen | Oxygen-containing water flow rate | 1300 ml/min | 1300 ml/min | 1300 ml/min |
| | Oxygen-containing water pressure | 2.1 atmospheres | 2.1 atmospheres | 2.1 atmospheres |
| | Hydrogen pressure | 2.3 atmospheres | 2.3 atmospheres | 2.3 atmospheres |
| | Oxygen content | 1.2 mg/L | 2.2 mg/L | 3.2 mg/L |
| | Hydrogen content | 0.2 mg/L | 0.4 mg/L | 0.9 mg/L |
| | ORP | - 294 mV | -485mV | - 566 mV |
| | pH | 7.2 | 7.2 | 7.2 |

The following can be seen from the results shown in Table 1. In each of Examples 2 and 3 using the ejectors 50A, 50B and the static mixer there is obtained neutral oxygen-containing reducing water having an oxygen content of not lower than 2.2 mg/L and yet having excellent reducing ability of not higher than -485 mV in terms of an oxidation-reduction potential. But the oxygen content is higher and the oxidation-reduction potential is lower in Example 3 using a 32-element type static mixer than in Example 2 using an 8-element type static mixer.

On the other hand, the oxygen content is lower and the oxidation-reduction potential of -295 mV is higher in Example 1 using only the ejectors 50A and 50b and not using the static mixer than in Example 2. However, even in Example 1, the oxygen content and the oxidation-reduction potential fully satisfy the conditions required of oxygen-containing reducing water. In each of Examples 1 to 3 the oxidation-reduction potential of the oxygen-containing water obtained by dissolving oxygen in raw water is low, but it is presumed that this phenomenon results from vaporization of chlorine contained in the raw water.

Thus, even if there are used the ejectors 50A and 50B alone, they exhibit respective gas dissolving abilities, but since the liquid-gas contact time is short because of a high liquid moving speed, a combination with the static mixer can ensure a high oxygen concentration of the oxygen-containing reducing water and permits reduction of the oxidation-reduction potential. Moreover, from the results shown in Examples 2 and 3 it is seen that the larger the number of elements in the static mixer, the higher can be made the oxygen concentration of the oxygen-containing reducing water and the lower the oxidation-reduction potential. However, a too large number of elements in the static mixer will encounter saturation of the resulting effect and therefore it is preferable that the upper limit of the number of elements be set at 32 elements or so.

### [Example 4]

In Example 4, an oxygen-containing reducing tea beverage was produced by the oxygen-containing reducing aqueous beverage producing apparatus 10 provided with only the same first ejector 50A and second ejector 50B as in Example 1, not provided with a static mixer, and using a commercially available tea beverage as an aqueous beverage. First, oxidation-reduction potential, dissolved oxygen quantity and pH of the tea beverage were measured and found to be +60 mV, 1.55 mg/liter, and 6.1, respectively. The tea beverage and oxygen gas were fed simultaneously to the first ejector 50A at a rate of 500 ml/min under a pressure of 8 atmospheres and at a rate of 150 ml/min under a pressure of 8 atmospheres, respectively, allowing oxygen to be dissolved in the tea beverage, followed by release to normal pressure. Dissolved oxygen quantity of the oxygen-containing tea beverage obtained within the receiver 21 was measured and found to be 31.00 mg/liter.

This oxygen-containing tea beverage and hydrogen gas were again fed simultaneously to the second ejector 50B at a rate of 500 ml/min under a pressure of 8 atmospheres and at a rate of 150 ml/min under a pressure of 8 atmospheres, respectively, allowing hydrogen to be dissolved in the oxygen-containing tea beverage, followed by release to normal pressure. As a result, there was obtained an oxygen-containing reducing tea beverage having a dissolved oxygen quantity of 4.50 mg/liter, a pH of 6.1 and an oxidation-reduction potential of-599 mV.

### [Example 5]

In Example 4, an oxygen-containing reducing coffee beverage was produced using a commercially available coffee beverage and in the same way as in Example 3 This coffee beverage was found to have an oxidation-reduction potential of +85 mV, a dissolved oxygen quantity of 1.22 mg/liter and a pH of 5.0. This coffee beverage and oxygen gas were fed simultaneously to the first ejector 50A at a rate of 500 ml/min under a pressure of 8 atmospheres and at a rate of 150 ml/min under a pressure of 8 atmospheres, respectively, allowing oxygen to be dissolved in the coffee beverage, followed by release to normal pressure. As a result, within the receiver 21 there was obtained an oxygen-containing Coffee beverage, which was found to have a dissolved oxygen quantity of 32.70 mg/liter.

The oxygen-containing coffee beverage thus obtained and hydrogen gas were again fed simultaneously to the second ejector 50B at a rate of 500 ml/min under a pressure of 8 atmospheres and at a rate of 150 ml/min under a pressure of 8 atmospheres, respectively, allowing hydrogen to be dissolved in the coffee beverage, followed by release to normal pressure. As a result, there was obtained an oxygen-containing reducing coffee beverage having a pH of 5.0, a dissolved oxygen quantity of 6.51 mg/liter and an oxidation-reduction potential of -428 mV

### [Example 6]

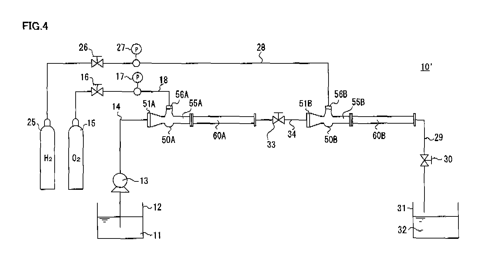

In the oxygen-containing reducing aqueous beverage producing apparatus 10 shown in Fig. 1, a pressurized oxygen-containing aqueous beverage is once obtained by the first ejector 50A and the first static mixer 60A, followed by release to normal pressure to afford an oxygen-containing aqueous beverage of normal pressure, which is then pressurized again and fed to the second ejector 50B. However, the pressure reducing step and the pressurizing step both performed in this section may be omitted. A modified example which omits such pressure reducing step and pressurizing step will now be described as Example 6 with reference to Fig. 4. In Fig- 4, the same components as in the oxygen-containing reducing aqueous beverage producing apparatus 10 shown in Fig. 1 and used in Examples 1 to 3 are identified by like reference numerals and detailed explanations thereof will be omitted in the following description.

The oxygen-containing reducing aqueous beverage producing apparatus shown in Fig. 4 and used in Example 6, which apparatus is indicated at 10', is different from the apparatus 10 of Fig. 1 only in that the first static mixer 60A and the liquid introduction path 51B in the second ejector 50B are connected with each other through a flow control valve 33 and an oxygen-containing aqueous beverage supply pipe 34 and a pressurized oxygen-containing aqueous beverage obtained in the first ejector 50A is fed directly to the liquid introduction path 51B in the second ejector 50B through the flow control valve 33 and the oxygen gas supply pipe 34. Other constructional points are substantially the same as in the apparatus 10.

In this case, the flow control valve 33 may be omitted. However, if the pressurized oxygen-containing aqueous beverage is fed to the liquid introduction path 51B in the second ejector 50B while imparting a slight pressure loss thereto in this portion, the flow rate becomes stable and therefore it becomes easier to effect control. Thus, the provision of the flow control valve 33 is preferred. In the oxygen-containing reducing aqueous beverage producing apparatus 10' used in this Example 6, a gaseous hydrogen-oxygen mixture containing a larger amount of oxygen gas than in Example 1 vaporizes in the oxygen-containing reducing aqueous beverage receiver 31 which is held at normal pressure, so it is necessary to let the gaseous mixture be discharged outdoor promptly. Also in the oxygen-containing reducing aqueous beverage producing apparatus 10' used in Example 6, as is the case with Example 1, both first and second static mixers 60A, 60B may be omitted. In this case, due to a short liquid-gas contact time, the oxygen content becomes low and the oxidation-reduction potential rises. However, the oxygen content and oxidation-reduction potential obtained according to the present invention fully satisfy the conditions required of the oxygen- containing reducing aqueous beverage.

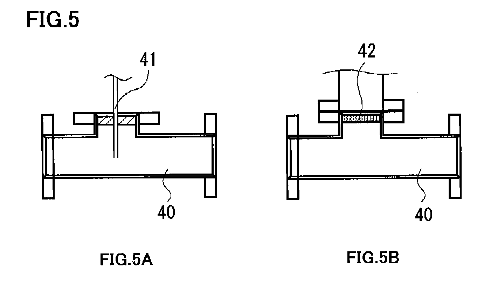

Although in Examples 1 to 6 there were used ejectors as means for dissolving gas into liquid, there also may be used, for example, such means as shown in Fig. 5A wherein a gas inlet port 41 is formed within a pipe 40 or such means as shown in Fig. 5B wherein a gas permeating film or porous gas permeating plate 42 is provided in part of the pipe 40. However, these means for dissolving gas into liquid are not high in gas dissolving efficiency as compared with the ejectors and therefore a combination thereof with a static mixer is recommended.

## Claims

1. A method for producing an oxygen-containing reducing aqueous beverage, which method comprises the following steps (1) to (4):
(1) mixing pressurized oxygen gas into a pressurized aqueous beverage flowing through a pipe to afford a pressurized oxygen-containing aqueous beverage;
(2) releasing the pressure of said pressurized oxygen-containing aqueous beverage to normal pressure to afford an oxygen-containing aqueous beverage of normal pressure with undissolved oxygen gas released;
(3) pressurizing said oxygen-containing aqueous beverage of normal pressure to afford a pressurized oxygen-containing aqueous beverage;
(4) mixing pressurized hydrogen gas into said pressurized oxygen-containing aqueous beverage flowing through a pipe to afford a pressurized oxygen-containing reducing aqueous beverage; and
(5) releasing the pressure of said pressurized oxygen-containing reducing aqueous beverage to normal pressure, thereby allowing undissolved oxygen gas and hydrogen gas to be released to afford an oxygen-containing reducing aqueous beverage of normal pressure.

2. A method according to claim 1, wherein said pressuring pressure is in the range of 1 to 1000 atmospheres.

3. A method according to claim 1, wherein said aqueous beverage is one member selected from the group consisting of water, mineral water, tea, coffee, and juice.

4. A method according to any of claims 1 to 3, wherein said steps (1) and (4) are each carried out using a static mixer.

5. A method according to any of claims 1 to 3, wherein said steps (1) and (4) are each carried out using an ejector.

6. A method according to any of claims 1 to 3, wherein said steps (1) and (4) are each carried out using an ejector and a static mixer.

7. A method for producing an oxygen-containing reducing aqueous beverage, which method comprises the following steps (1) to (3):
(1) mixing pressurized oxygen gas into a pressurized aqueous beverage flowing through a pipe to afford a pressurized oxygen-containing aqueous beverage;
(2) mixing pressurized hydrogen gas into said pressurized oxygen- containing aqueous beverage flowing through a pipe to afford a pressurized oxygen-containing reducing aqueous beverage; and
(3) releasing the pressure of said pressurized oxygen-containing reducing aqueous beverage to normal pressure, thereby allowing undissolved oxygen gas and hydrogen gas to be released to afford an oxygen-containing aqueous beverage of normal pressure.

8. A method according to claim 7, wherein said pressurizing pressure is in the range of 1 to 1000 atmospheres.

9. A method according to claim 7, wherein said aqueous beverage is one member selected from the group consisting of water, mineral water, tea, coffee, and juice.

10. A method according to any of claims 7 to 9, wherein said steps (1) and (2) are each carried out using a static mixer.

11. A method according to any of claims 7 to 9, wherein said steps (1) and (2) are each carried out using an ejector.

12. A method according to any of claims 7 to 9, wherein said steps (1) and (2) are each carried out using an ejector and a static mixer.

13. An apparatus for producing an oxygen-containing reducing aqueous beverage, comprising:
an aqueous beverage supply pipe for the supply of an aqueous beverage in a pressurized state by a pump, said aqueous beverage supply pipe being connected to a liquid introduction path in first pipe-like gas-liquid mixing means;
an oxygen gas supply pipe for the supply of pressurized oxygen gas from a pressurized oxygen supply source, said oxygen gas supply pipe being connected to a gas introduction path in said first pipe-like gas-liquid mixing means;
a receiver for receiving therein an oxygen-containing aqueous beverage held at normal pressure, an outlet flow path in said first pipe-like gas-liquid mixing means being connected to said receiver;
an oxygen-containing aqueous beverage supply pipe for the supply of the oxygen-containing aqueous beverage from said receiver in a pressurized state by a pump, said oxygen-containing aqueous beverage supply pipe being connected to a liquid introduction path in second pipe-like gas-liquid mixing means;
a hydrogen gas supply pipe for the supply of pressurized hydrogen gas from a pressurized hydrogen supply source, said hydrogen gas supply pipe being connected to a gas introduction path in said second pipe-like gas-liquid mixing means, and
a receiver for receiving therein an oxygen-containing reducing aqueous beverage held at normal pressure, an outlet flow path in said second pipe-like gas-liquid mixing means being connected to said receiver.

14. An apparatus according to claim 13, wherein said pressurized oxygen supply source and said pressurized hydrogen supply source are each contained in a gas cylinder.

15. An apparatus according to claim 13, wherein said aqueous beverage supply source is at least one member selected from the group of supply sources consisting of water, mineral water, tea, coffee, and juice.

16. An apparatus according to any of claims 13 to 15, wherein said first and second pipe-like gas-liquid mixing means are each provided with a static mixer.

17. An apparatus according to any of claims 13 to 15, wherein said first and second pipe-like gas-liquid mixing means are each provided with an ejector.

18. An apparatus according to any of claims 13 to 15, wherein said first and second pipe-like gas-liquid mixing means are each provided with an ejector and a static mixer.

19. An apparatus for producing an oxygen-containing reducing aqueous beverage, comprising:
an aqueous beverage supply pipe for the supply of an aqueous beverage in a pressurized state by a pump, said aqueous beverage supply pipe being connected to a liquid introduction path in first pipe-like gas-liquid mixing means;
a second pipe for the supply of pressurized oxygen gas from a pressurized oxygen supply source, said second pipe being connected to a gas introduction path in said first pipe-like gas-liquid mixing means;
an outlet flow path in said first pipe-like gas-liquid mixing means, said outlet flow path being connected to a liquid introduction path in second pipe-like gas-liquid mixing means;
a hydrogen gas supply pipe for the supply of pressurized hydrogen gas from a pressurized hydrogen supply source, said hydrogen gas supply pipe being connected to a gas introduction path in said second pipe-like gas-liquid mixing means; and
a receiver for receiving therein an oxygen-containing reducing aqueous beverage held at normal pressure, an outlet flow path in said second pipe-like gas-liquid mixing means being connected to said receiver.

20. An apparatus according to claim 19, wherein said pressurized oxygen supply source and said pressurized hydrogen supply source are each contained in a gas cylinder.

21. An apparatus according to claim 19, wherein said aqueous beverage supply source is at least one member selected from the group consisting of water, mineral water, tea, coffee, and juice.

22. An apparatus according to any of claims 19 to 21, wherein said first and second pipe-like gas-liquid mixing means are each provided with a static mixer.

23. An apparatus according to any of claims 19 to 21, wherein said first and second pipe-like gas-liquid mixing means are each provided with an ejector.

24. An apparatus according to any of claims 19 to 21, wherein said first and second pipe-like gas-liquid mixing means are each provided with an ejector and a static mixer.
